# FASCICULE DE BREVET EUROPEEN

(11) **EP 0 909 629 B1**
(45) Date de publication et mention de la délivrance du brevet: **08.08.2001**
(21) Numéro de dépôt: 97420191.5
(22) Date de dépôt: 15.10.1997
(51) Int. Cl.: B29C 49/00

(54) **Installation pour la fabrication par dépression de corps tubulaires en matière synthétique**
Vorrichtung zum Herstellen von rohrähnlichen Gegenständen aus Kunststoff unter Verwendung von Vacuum
Apparatus for fabricating tubular thermoplastic articles by using vacuum

(43) Date de publication de la demande: 21.04.1999
(73) Titulaire: CORELCO, 01920 Manziat (FR)
(72) Inventeur: Courant, Alain, 01190 Chavannes Sur Reyssouze (FR)
(74) Mandataire: Perrier, Jean-Pierre

(56) Documents cités:
- EP-A- 0 464 411
- EP-A- 0 621 120
- EP-A- 0 734 835
- WO-A-93/25373
- FR-A- 1 582 199

## Description

Installation pour la fabrication par dépression externe de corps tubulaires en matière synthétique.

L'invention est relative aux coquilles utilisées dans les installations de fabrication de corps tubulaires en matière synthétique et par exemple de corps annelés.

Dans de beiles installations, les empreintes sont tournées vers l'extérieur et forment deux chaînes, sans fin et juxtaposées, dont deux brins parallèles viennent de part et d'autre de la trajectoire de sortie de la paraison tubulaire d'une extrudeuse de matière synthétique. Les coquilles sont de forme prismatique avec une face frontale de laquelle débouche l'empreinte, une face dorsale et deux faces latérales. Elles sont déplacées et guidées en translation par des moyens portés par un bâti et, pendant la formation du corps tubulaire, les faces frontales de deux coquilles en vis à vis sont plaquées l'une contre l'autre pour former une empreinte en forme de tunnel.

Lorsque le plaquage de la paraison contre l'empreinte est assuré par dépression, comme décrit dans EP-A 734 835 chaque coquille comporte un circuit interne de vide coopérant, dans la zone de formation du corps tubulaire, avec un circuit externe ménagé dans des parois venant en contact avec la face dorsale des coquilles. En raison des tolérances de fabrication des coquilles, mais aussi des jeux fonctionnels entre les coquilles, il peut arriver que les faces frontales des coquilles en vis à vis ne viennent pas parfaitement en contact. Cela a pour inconvénient de créer des fuites qui perturbent le circuit interne de mise en dépression et peuvent conduire d'une part, dans le plan de joint de deux coquilles en vis à vis, à une fuite de la matière synthétique formant une arête très visible sur le corps tubulaire, et d'autre part, dans les empreintes et par défaut d'alimentation des fentes semi-circulaires disposées dans le fond des gorges de formation de l'annelage, à des malformations du corps et de l'annelage.

Ces mêmes tolérances de fabrication et jeux fonctionnels permettent également la création de fuites entre les faces latérales des coquilles, fuites conduisant aux mêmes inconvénients.

Dans FR-A-1 582 199, les coquilles de la forme d'exécution de figure 5 comprennent une garniture interne en matière poreuse à l'air répartissant la dépression dans l'empreinte et de part et d'autre de celle-ci dans son plan de joint. Cette technologie entraîne une surconsommation de vide, nécessite des joints extrêmes et conduit à des résultats variables au fur et à mesure de l'encrassement de la garniture poreuse par les poussières. Enfin, elle n'apporte aucune solution à la fuite de matière synthétique dans le plan de joint si les coquilles ne sont pas parfaitement plaquées.

WO-A-9325373 décrit des coquilles dont les plans de joint longitudinaux et transversaux peuvent être équipés de joints d'étanchéité, qui, en raison de la température communiquée aux coquilles par la matière synthétique en fusion, doivent être changées fréquemment pour éviter les fuites de vide. Par ailleurs, si la répartition de la dépression dans les empreintes est assurée par des rainures longitudinales débouchant du plan de joint, ces rainures ne communiquent pas directement avec les empreintes, ne s'étendent que sur une partie de la longueur du moule et ne peuvent pas empêcher les fuites de vide dans le plan de joint et donc la formation de défauts d'aspect.

La présente invention a pour objet de remédier à ces inconvénients en fournissant des coquilles réduisant la consommation de vide, améliorant la répartition de la dépression dans les empreintes, et permettant d'obtenir des corps tubulaires de forme régulière sans arêtes, bavures, malformations ou défauts d'aspect.

Elle concerne une installation dans laquelle l'empreinte de chaque coquille est alimenté en vide par un circuit externe fixe, raccordé à une source de vide et communiquant localement avec un circuit interne ménagé dans chaque coquille et composé de gorges dorsales communiquant avec des rainures débouchant de la face frontale de la coquille et de part et d'autre de l'empreinte.

Selon l'invention, le circuit interne d'alimentation en vide d'au moins l'une des coquilles, de chaque groupe de deux coquilles, comprend deux rainures longitudinales qui, débouchant de sa face frontale, sont disposées parallèlement et de part et d'autre de l'empreinte, sont continues depuis une extrémité borgne jusqu'à leur autre extrémité débouchant de l'une des faces latérales de la coquille et communiquent avec les fentes d'alimentation de l'empreinte, ces rainures étant alimentées par des rainures transversales qui, ménagées dans la face latérale de laquelle leurs extrémités débouchent, communiquent elles-mêmes avec les gorges dorsales d'alimentation.

Ainsi, dès que le circuit externe alimente en vide le circuit interne d'une coquille, la dépression créée dans les rainures longitudinales aspire l'air s'infiltrant par le jeu dans le plan de joint entre deux coquilles et supprime les chutes de dépression dans les empreintes, c'est-à-dire supprime tout défaut de moulage, dans le plan de joint et dans les empreintes. La dépression dans les rainures transversales de la face latérale produit les mêmes effets et permet de former une empreinte tubulaire, continue et étanche, en supprimant ainsi tous les défauts de formation des corps tubulaires par déficience du circuit d'alimentation en vide.

A ces avantages s'ajoute une simplification de la fabrication du circuit interne d'alimentation en vide de chaque coquille, par suppression de tous canaux internes affaiblissant les coquilles de petites dimensions.

Il en résulte une diminution du coût de fabrication des coquilles et une amélioration de leur résistance mécanique.

L'invention sera mieux comprise à l'aide de la description qui suit en référence au dessin schématique représentant, à titre d'exemple, une forme d'exécution de la coquille selon l'invention dans le cas de son application à la réalisation d'un corps tubulaire annelé.
Figure 1 est une vue schématique en plan par dessus avec coupe partielle d'une installation pour la fabrication de corps tubulaires,
Figure 2 est une vue en perspective de l'une des coquilles,
Figure 3 est une vue de face en bout de deux coquilles en vis à vis lorsqu'elles forment l'empreinte tunnel,
Figure 4 est une vue de face en bout d'une coquille bi-empreinte,
Figure 5 est une vue partielle en coupe montrant à échelle agrandie les effets, dans le plan de joint de deux coquilles, de la dépression générée, par l'action d'une rainure longitudinale.

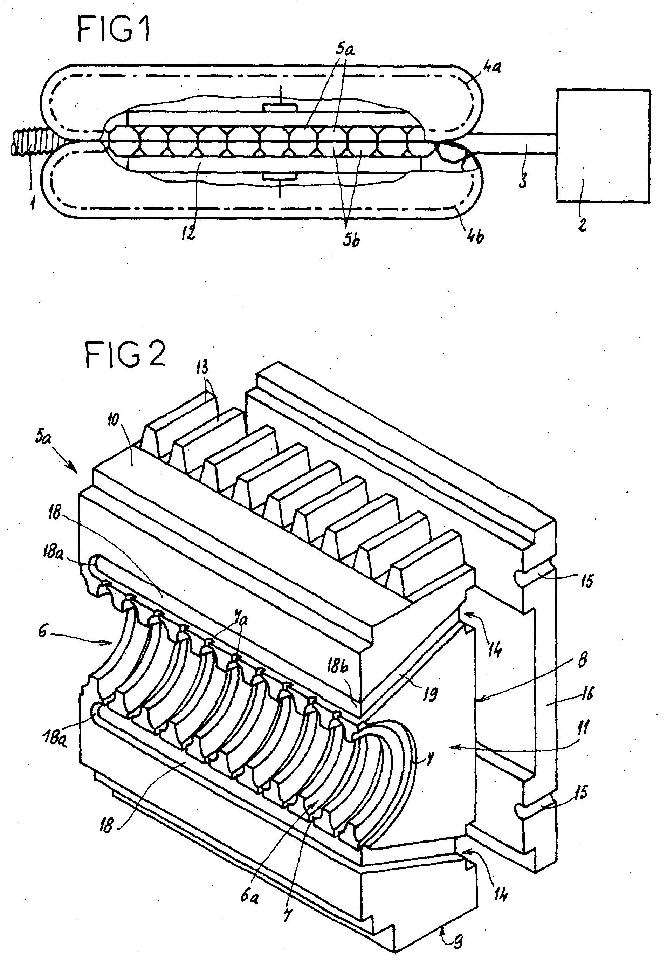

A la figure 1, représentant, de manière schématique l'installation pour la fabrication des tubes annelés, la référence numérique 2 désigne une machine d'extrusion dont la tête d'extrusion 3 débite une paraison tubulaire non visible. Les références 4a, 4b désignent deux chaînes de coquilles Sa, 5b comportant chacune, comme montré à la figure 2, une empreinte 6 apte à réaliser un conduit tubulaire annelé 1.

Les deux chaînes 4a, 4b sont disposées de part et d'autre de la trajectoire de déplacement de la paraison sortant de la tête d'extrusion 3 et de manière que leurs deux brins parallèles soient disposés de part et d'autre de cette trajectoire en formant une empreinte en forme de tunnel. Chaque coquille est formée par un bloc prismatique comportant, en section transversale, une face plane frontale et trois faces planes de guidage, à savoir une face dorsale 8, une face inférieure 9 et une face supérieure 10.

Lorsque les coquilles parviennent dans la zone de formation du conduit annelé, elles pénètrent dans un bâti 12 qui, non seulement, assure leur guidage en translation mais également les plaque contre les coquilles en vis à vis. Ce bâti comporte des moyens assurant l'entraînement en translation positive des coquilles, telles que des roues dentées motrices coopérant avec des crémaillères 13 saillant de l'une des faces de chaque coquille.

L'installation ici représentée est du type assurant la formation d'un corps tubulaire annelé, au moyen d'une dépression réalisée dans l'empreinte, entre la paroi de cette empreinte et la paraison. De ce fait, chacun des logements 6a formant un demi-anneau communique, par une fente semi circulaire 7, avec un circuit interne ménagé dans la coquille.

Dans la forme d'exécution représentée, correspondant au dispositif de EP-A 734 835 ce circuit interne parvient dans deux gorges longitudinales 14 qui, débouchant de la face dorsale 8 de chaque coquille, sont destinées à coopérer avec le circuit externe comprenant des canaux 15 débouchant d'un corps de distribution fixe 16. Ces canaux 15 sont reliés à une source de vide, non représentée.

Le circuit interne d'alimentation en vide de chaque coquille 6 est constitué par des rainures longitudinales 18 qui sont disposées parallèlement et de part et d'autre de l'empreinte 6 et débouchent de la face frontale comme cette empreinte. Chacune de ces rainures 18 s'étend sur toute la longueur de la coquille depuis une extrémité borgne 18a jusqu'à l'autre extrémité 18b. Celle ci débouche de la face latérale 11 et communique avec une rainure transversale 19 ménagée dans cette face. Les deux rainures transversales 19 communiquent avec les gorges dorsales 14.

Chaque rainure longitudinale 18 est disposée autour de l'empreinte 6 de manière à sécanter, en 7a, les fentes semi circulaires 7 d'alimentation de l'empreinte 6.

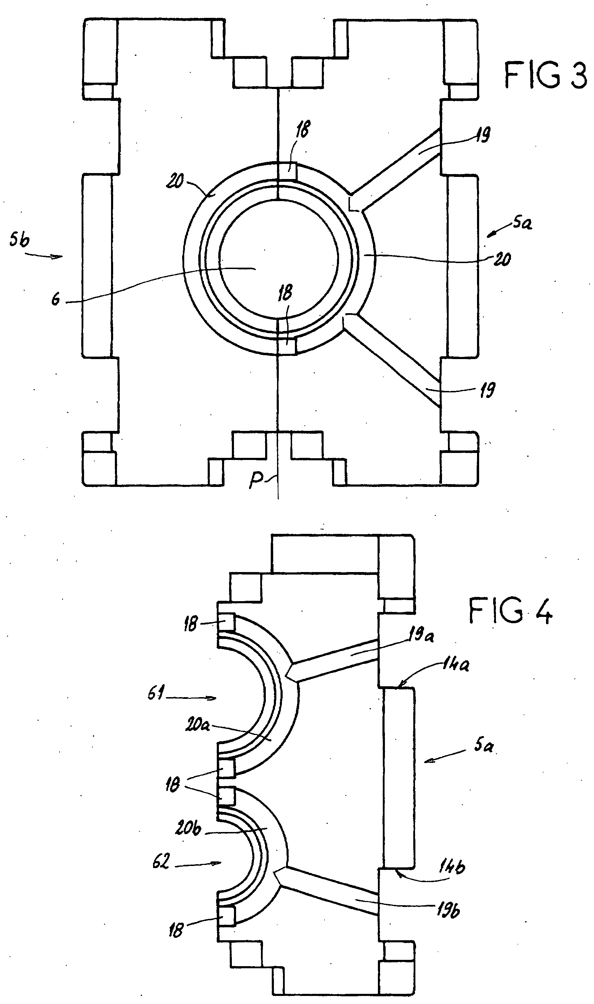

Dans la forme d'exécution représentée à la figure 3, les deux rainures transversales 19 communiquent avec les rainures longitudinales 18 par l'intermédiaire d'une gorge semi-circulaire 20, ménagée dans la même face latérale 11 que les rainures 19 et entourant l'empreinte 6 correspondante.

Dans chaque groupe de coquilles en vis-à-vis 5a, 5b, les deux coquilles peuvent être identiques, mais il s'est révélé que cela n'était pas indispensable et qu'une seule coquille pouvait comporter les rainures 18 et 19, comme montré à la figure 3.

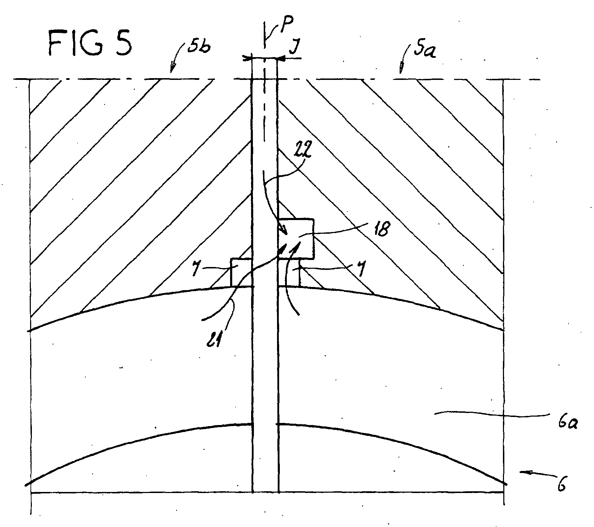

Lorsque ces coquilles parviennent au poste d'extrusion et pénètrent dans le bâti 12, les corps de distribution 16, disposés latéralement, alimentent en vide le circuit interne de chaque coquille. Comme montré figure 5, la dépression parvenant dans les rainures longitudinales 18, aspire les fuites de vide 21 et les entrées d'air 22 générées par le jeu fonctionnel J du plan de joint P à la figure 3, de l'ordre de 0,08 mm, et supprime donc les variations de dépression dans les parties des anneaux 6a débouchant dans le plan de joint.

Les rainures transversales 19 produisent les mêmes effets dans le plan de joint transversal entre deux jeux successifs de coquilles.

Il apparaît que cet aménagement simple permet d'assurer automatiquement l'étanchéité des divers plans de joint par utilisation de la dépression créée pour assurer la formation du conduit tubulaire et cela sans recours à des joints, résistant peu longtemps aux contraintes de température et de frottement. Dès que cette étanchéité est assurée, toutes fuites par les plans de joints considérés sont supprimées et la totalité de la dépression est transférée par les fentes semi circulaires 7 dans l'empreinte 6. Cela contribue à réduire la consommation de vide et à améliorer la fabrication, par suppression des malformations et défauts d'aspect.

La figure 5 montre que chacun des logements 6a de la coquille ne comportant pas les rainures 18 est alimenté en vide par le débouché de sa fente 7 dans le plan de joint, débouché coïncidant avec les fentes 7 ou les rainures longitudinales 18 ménagées en vis-à-vis.

Il en résulte que l'étanchéité de l'empreinte s'effectue dans des conditions parfaites et que la formation de bourrelets de matière aux plans de joints longitudinaux et transversaux est limitée à la marque des plans de joints.

La figure 4 montre l'application de l'invention aux coquilles bi-empreintes.

Dans ces conditions, chaque empreinte 61, 62 est bordée longitudinalement par une rainure 18 débouchant de sa face frontale et communiquant avec une gorge semi-circulaire 20a ou 20 b, raccordée à une rainure transversale 19a, 19b débouchant dans les gorges dorsales 14a, 14b. Les gorges 14a, 14b, sont alimentées individuellement par le circuit externe comportant, ou non, le dispositif décrit dans la demande de brevet européen 734 835 au nom du déposant.

Bien que les rainures longitudinales 18 puissent être réalisées sur les coquilles Sa, 5b en vis-à-vis, par exemple en partie supérieure sur une coquille 5a, et en partie inférieure sur une partie 5b, il est avantageux qu'elle ne soit réalisée que sur une coquille, par exemple celle 5a, puisque cela réduit les coûts de fabrication et simplifie la construction de l'installation en disposant le circuit externe d'alimentation en vide que d'un côté de la trajectoire des deux chaînes de coquilles délimitant l'empreinte tunnel de formation du conduit tubulaire annelé.

## Revendications

1. Installation pour la fabrication par dépression de corps tubulaires en matière synthétique comprenant deux chaînes sans fin (4a, 4b) de coquilles (5a, 5b) avec leurs empreintes (6) tournées vers l'extérieur, chaînes dont deux brins parallèles viennent de part et d'autre de la trajectoire rectiligne d'au moins une paraison tubulaire en matière synthétique, en formant une empreinte tunnel, installation dans laquelle chaque coquille a une forme générale prismatique avec une face frontale de laquelle débouche une empreinte, une face dorsale et deux faces latérales, et l'empreinte de chaque coquille (5a, 5b) est alimentée en vide par un circuit externe fixe (15), raccordé à une source de vide et communiquant localement avec un circuit interne ménagé dans chaque coquille et composé de gorges dorsales (14) communiquant avec des rainures (7) débouchant de la face frontale de la coquille et dans l'empreinte, ces rainures étant disposées de part et d'autre de cette empreinte, **caractérisée en ce que** le circuit interne d'alimentation en vide d'au moins l'une des coquilles (5a), de chaque groupe de deux coquilles (5a, 5b) comprend deux rainures longitudinales (18) qui, débouchant de sa face frontale, sont disposées parallèlement et de part et d'autre de l'empreinte (6), sont continues, depuis une extrémité borgne (18a) jusqu'à leur autre extrémité débouchant de l'une des faces latérales (11) de la coquille, et communiquent avec les fentes d'alimentation (7) de l'empreinte, ces rainures (18) étant alimentées par des rainures transversales (19) qui, ménagées dans la face latérale (11), communiquent elles-mêmes avec les gorges dorsales (14) d'alimentation.

2. Installation selon la revendication 1, caractérisée en ce que les rainures longitudinales borgnes (18) débouchent dans une gorge semi-circulaire (20) entourant l'empreinte (6), et ménagée dans la face latérale (11) de la coquille, cette rainure étant elle-même alimentée par au moins une rainure transversale (19) débouchant de cette face latérale (11).

3. Installation selon la revendication 1, caractérisée en ce que chacune des deux empreintes superposées (61, 62) d'une coquille bi-empreintes est bordée par deux rainures longitudinales (18), borgnes à une extrémité et débouchant dans une gorge semi-circulaire (20a, 20b), ménagée dans la face latérale (11) de cette coquille, chaque gorge communiquant, par une rainure transversale (19a, 19b) débouchant de cette face latérale, avec une gorge d'alimentation dorsale (14a, 14b).

4. Installation selon l'une quelconque des revendications 1 à 3, caractérisée en ce que, dans chaque groupe de deux coquilles (5a, 5b) en vis-à-vis, seulement l'une des coquilles (5a) est munie de rainures, respectivement longitudinales (18), semi-circulaire (20) et transversales (19) d'alimentation en vide.

## Patentansprüche

1. Vorrichtung zur Herstellung von röhrenförmigen Körpern aus Kunststoff unter Verwendung von Unterdruck, mit zwei Endlosketten (4a, 4b) von Werkzeugformbacken (5a, 5b), deren Werkzeugkonturen (6) nach außen weisen, wobei sich zwei parallele Trumme der Ketten auf beiden Seiten der geradlinigen Bahn mindestens eines röhrenförmigen Vorformlings aus Kunststoff erstrecken und dabei eine tunnelförmige Werkzeugkontur bilden, und wobei bei der Vorrichtung jede Werkzeugformbacke eine allgemein prismatische Form aufweist mit einer Vorderseite, von der eine Werkzeugkontur ausgeht, einer Rückseite und zwei lateralen Seiten, und die Werkzeugkontur jeder Werkzeugformbacke (5a, 5b) über einen externen, festen Kreislauf (15) mit Unterdruck versorgt wird, wobei der Kreislauf an eine Unterdruckquelle angeschlossen ist und lokal mit einem internen Kreislauf in Verbindung steht, welcher in jeder Werkzeugformbacke vorgesehen ist und aus rückseitigen Ausnehmungen (14) gebildet ist, die mit von der Vorderseite der Werkzeugformbacke ausgehenden und in die Werkzeugkontur mündenden Nuten (7) in Verbindung stehen, wobei diese Nuten auf beiden Seiten dieser Werkzeugkontur angeordnet sind, dadurch gekennzeichnet, daß der interne Unterdruckversorgungskreislauf mindestens einer der Werkzeugformbacken (5a) jeder aus zwei Werkzeugformbacken (5a, 5b) bestehenden Gruppe zwei Längsnuten (18) umfaßt, die von ihrer Vorderseite ausgehen, parallel und auf beiden Seiten der Werkzeugkontur (6) angeordnet sind, von einem Sackende (18a) bis zu ihrem anderen Ende durchgehend verlaufen, das in eine der lateralen Seiten (11) der Werkzeugformbacke mündet, und mit den Versorgungsschlitzen (7) der Werkzeugkontur in Verbindung stehen, wobei diese Nuten (18) durch Quernuten (19) versorgt werden, die in der lateralen Seite (11) ausgebildet sind und wiederum mit den rückseitigen Versorgungsausnehmungen (14) in Verbindung stehen.

2. Vorrichtung nach Anspruch 1, dadurch gekennzeichnet, daß die Längssacknuten (18) in eine halbkreisförmige Ausnehmung (20) münden, die die Werkzeugkontur (6) umgibt und in der lateralen Seite (11) der Werkzeugformbacke ausgebildet ist, wobei diese Nut wiederum durch mindestens eine Quernut (19) versorgt wird, die von dieser lateralen Seite (11) ausgeht.

3. Vorrichtung nach Anspruch 1, dadurch gekennzeichnet, daß jede der beiden übereinander gelagerten Werkzeugkonturen (61, 62) einer Werkzeugformbacke mit Doppelwerkzeugkontur durch zwei Längsnuten (18) begrenzt wird, die an einem Ende einen Grund aufweisen und in eine halbkreisförmige Ausnehmung (20a, 20b) münden, die in der lateralen Seite (11) dieser Werkzeugformbacke ausgebildet ist, wobei jede Ausnehmung durch eine Quernut (19a, 19b), die von dieser lateralen Seite ausgeht, mit einer rückseitigen Versorgungsausnehmung (14a, 14b) in Verbindung steht.

4. Vorrichtung nach einem der Ansprüche 1 bis 3, dadurch gekennzeichnet, daß in jeder aus zwei einander gegenüberliegenden Werkzeugformbacken (5a, 5b) bestehenden Gruppe nur eine der Werkzeugformbacken (5a) mit Nuten versehen ist, nämlich Längsnuten (18), halbkreisförmige Nuten (20) bzw. Quernuten (19) zur Unterdruckversorgung.

## Claims

1. Apparatus for the vacuum production of tubular plastics articles, comprising two endless chains (4a, 4b) of moulds (5a, 5b) with their cavities (6) facing outwards, two parallel strands of the chains extending on either side of the rectilinear path of at least one tubular plastics parison, thus forming a tunnel cavity, apparatus in which each mould has a prismatic general shape comprising a front surface into which a cavity opens, a dorsal surface and two lateral surfaces, and the cavity of each mould (5a, 5b) is supplied with a vacuum by a fixed external circuit (15) connected to a vacuum source and communicating locally with an internal circuit provided in each mould and comprising dorsal channels (14) communicating with channels (7) opening into the front surface of the mould and into the cavity, these channels being arranged on either side of this cavity, characterised in that the internal circuit for supplying a vacuum to at least one of the moulds (5a) of each group of two moulds (5a, 5b) comprises two longitudinal channels (18) which, opening into the front surface of the mould, are arranged parallel on either side of the cavity (6), are continuous from a blind end (18a) to their other end opening into one of the lateral surfaces (11) of the mould, and communicate with the supply channels (7) of the cavity, these channels (18) being supplied by transverse channels (19) provided in the lateral surface (11) and themselves communicating with the dorsal supply channels (14).

2. Apparatus according to claim 1, characterised in that the blind longitudinal channels (18) open into a semi-circular channel (20) surrounding the cavity (6) and provided in the lateral surface (11) of the mould, this channel itself being supplied by at least one transverse channel (19) opening into the lateral surface (11).

3. Apparatus according to claim 1, characterised in that each of the two superimposed cavities (61, 62) of a dual-cavity mould is bordered by two longitudinal channels (18) blind at one end and opening into a semi-circular channel (20a, 20b) provided in the lateral surface (11) of this mould, each channel communicating with a dorsal supply channel (14a, 14b) via a transverse channel (19a, 19b) opening into the lateral surface (11).

4. Apparatus according to any one of claims 1 to 3, characterised in that, in each group of two facing moulds (5a, 5b), only one of the moulds (5a) is provided with longitudinal (18), semi-circular (20) and transverse (19) channels for supplying a vacuum.
